# EUROPÄISCHE PATENTANMELDUNG

(11) **EP 0 697 450 A2**
(43) Veröffentlichungstag der Anmeldung: **21.02.1996**
(21) Anmeldenummer: 95112483.3
(22) Anmeldetag: 09.08.1995
(51) Int. Cl.: C09J 9/00, D06P 1/00

(54) **Wasserlösliches Klebemittel für den Textilfilmdruck**

(30) Priorität: 18.08.1994 DE 4429263
(71) Anmelder: BASF AKTIENGESELLSCHAFT, D-67056 Ludwigshafen (DE)
(72) Erfinder: Schneider, Reinhard, Dr., D-67136 Fussgönheim (DE); Winkler, Johannes, D-69488 Birkenau (DE); Denzinger, Walter, D-67346 Speyer (DE); Hartmann, Heinrich Dr., D-67117 Limburgerhof (DE); Nieberle, Jürgen, Dr., D-67157 Wachenheim (DE)

(57) **Zusammenfassung**

Verwendung von jeweils wasserlöslichen
(1) Homopolymerisaten aus Acrylamid oder Methacrylamid oder Copolymerisaten aus Acrylamid und Methacrylamid,
(2) Copolymerisaten aus
   (a) Acrylamid und/oder Methacrylamid und/oder
   (b) Acrylnitril und/oder Methacrylnitril und/oder
   (c) monoethylenisch ungesättigten Carbonsäuren,
(3) Copolymerisaten aus
   (a) monoethylenisch ungesättigten Carbonsäuren und
   (b) Acrylnitril und/oder Methacrylnitril
   oder
(4) Copolymerisaten aus
   (a) C₂- bis C₈-Olefinen und
   (b) monoethylenisch ungesättigten Carbonsäuren,
   wobei die Carboxylgruppen enthaltenden Copolymerisate der Gruppen (2), (3) und (4) in Form der Ammonium-, Alkalimetall- und Erdalkalimetallsalze vorliegen können,
   als Klebemittel für den Textilfilmdruck.

## Beschreibung

Die Erfindung betrifft die Verwendung von wasserlöslichen Polymerisaten als Klebemittel für den Textilfilmdruck.

Im Textilfilmdruck ist es notwendig, die zu bedruckende Ware während des Druckprozesses auf der Druckdecke gegen Verrutschen zu fixieren. In der Praxis geht man dabei so vor, daß man das Textilgut auf die Druckdecke aufklebt. Man erreicht dadurch eine hohe Mustergenauigkeit des Drucks. Als Klebemittel für den Textilfilmdruck werden in Ullmann, Encyklopädie der Technischen Chemie, 4. Auflage, Verlag Chemie, Weinheim 1983, Band 23, S. 76 und 77, wasserlösliche und wasserunlösliche Klebemittel beschrieben. Wasserlösliche Klebemittel sind beispielsweise abgebaute Stärken, Stärkederivate, Polyvinylalkohole und Polyvinylcaprolactame, die keine bzw. nur relativ wenig Hydroxylgruppen enthalten. Nach dem Druckprozeß durchläuft die Druckdecke eine Waschvorrichtung, in der Reste von Druckpasten und das wasserlösliche Klebemittel ausgewaschen werden. Die Hydroxylgruppen enthaltenden Klebemittel haben den Nachteil, daß sie mit vielen Reaktivfarbstoffen der Druckpasten reagieren können, was zu einer verminderten Farbausbeute führt. Weiterhin kommt es häufig vor, daß bei den Produkten auf Basis von Naturstoffen am bedruckten Textilgut Rückstände des Klebers haften, die wahrend des Dämpfprozesses verhärten und nicht mehr vollständig ausgewaschen werden können. Dies führt zu einem harten Warengriff. Polyvinylcaprolactam hat den Nachteil, daß es nur eine begrenzte Löslichkeit in Wasser aufweist und daß die Löslichkeit mit zunehmender Temperatur abnimmt.

Als wasserunlösliche Klebemittel kommen Thermoplastkleber in Betracht, die aus wasserunlöslichen Mischpolymerisaten auf Acrylatbasis aufgebaut sind und in Form einer Lösung in einem organischen Lösemittel, wie Ethylacetat, auf die Druckdecke aufgebracht werden. Damit der Thermoplastkleber seine Klebwirkung entfalten kann, benötigt man ein Heizaggregat. Außerdem muß man die zu bedruckende Warenbahn mit Hilfe einer Walze an die Druckdecke anpressen. Thermoplastkleber haben den Nachteil, daß beispielsweise Benzinemulsionen enthaltende Druckpasten nicht verwendet werden können, weil dadurch der Kleberfilm von der Druckdecke abgelöst und das Textilgut darauf nicht mehr fixiert wird. Bei den modernen Flachfilmdruck- und Rotationsfilmdruckmaschinen können Thermoplastkleber wegen der starken mechanischen Belastung der Druckdecke durch das Waschaggregat nicht eingesetzt werden.

Der Erfindung liegt die Aufgabe zugrunde, einen wasserlöslichen Kleber für den Textilfilmdruck zur Verfügung zu stellen. Der Kleber soll dabei einen weiten Löslichkeitsbereich in Wasser aufweisen, eine hohe Klebkraft besitzen und über ein gutes Auswaschverhalten aus dem Textilgut nach dem Dämpfen bzw. Kondensieren verfügen.

Die Aufgabe wird erfindungsgemäß gelöst durch Verwendung von jeweils wasserlöslichen
(1) Homopolymerisaten aus Acrylamid oder Methacrylamid oder Copolymerisaten aus Acrylamid und Methacrylamid,
(2) Copolymerisaten aus
   (a) Acrylamid und/oder Methacrylamid,
   (b) Acrylnitril und/oder Methacrylnitril und/oder
   (c) monoethylenisch ungesättigten Carbonsäuren,
(3) Copolymerisaten aus
   (a) monoethylenisch ungesättigten Carbonsäuren und
   (b) Acrylnitril und/oder Methacrylnitril
   oder
(4) Copolymerisaten aus
   (a) C₂- bis C₈-Olefinen und
   (b) monoethylenisch ungesättigten Carbonsäuren,
wobei die Carboxylgruppen enthaltenden Copolymerisate der Gruppen (2), (3) und (4) auch in Form der Ammonium-, Alkalimetall- und Erdalkalimetallsalze vorliegen können,
als Klebemittel für den Textilfilmdruck.

Die obengenannten Homo- und Copolymerisate sind bekannt. So werden beispielsweise die als Gruppe (1) beschriebenen Polymerisate durch Homopolymerisation von Acrylamid oder Methacrylamid oder durch Copolymerisieren von Acrylamid und Methacrylamid in jedem beliebigen Verhältnis hergestellt. Die Polymerisation kann beispielsweise nach Art einer Lösungspolymerisation in wäßrigem Medium in Gegenwart von Polymerisationsinitiatoren oder durch Polymerisieren der Monomeren in einer Wasser-in-Öl-Polymeremulsion und Isolieren des Polymerisats aus der Polymeremulsion vorgenommen werden.

Die Polymerisate der Gruppe (2) sind Copolymerisate aus
(a) Acrylamid und/oder Methacrylamid,
(b) Acrylnitril und/oder Methacrylnitril und/oder
(c) monoethylenisch ungesättigten Carbonsäuren.

Bevorzugte Copolymerisate der Gruppe (2) werden durch Copolymerisieren von
(a) Acrylamid,
(b) Acrylnitril und gegebenenfalls
(c) Acrylsäure und/oder Methacrylsäure
hergestellt.

Bevorzugt als Klebemittel für den Textilfilmdruck werden Copolymerisate aus
(a) 99 bis 60 Gew.-% Acrylamid und
(b) 1 bis 40 Gew.-% Acrylnitril
mit K-Werten von 30 bis 125 (bestimmt nach H. Fikentscher in 1 gew.-%iger wäßriger Lösung bei 25°C und pH 7,0) eingesetzt.

Sämtliche oben beschriebenen Copolymerisate können gegebenenfalls durch zusätzlichen Einsatz von anderen Monomeren bei der Copolymerisation modifiziert werden. Die dafür eingesetzten Mengen an Comonomeren betragen beispielsweise bis zu höchstens 10 Gew.-%, bezogen auf die gesamten bei der Copolymerisation eingesetzten Monomeren. Zur Modifizierung der Copolymeren eignen sich beispielsweise folgende Monomere:

Acrylsäureester wie Methylacrylat, Ethylacrylat, n-Propylacrylat, Isopropylacrylat und Butylacrylat, Methacrylsäureester wie Methylmethacrylat, Ethylmethylacrylat und Isopropylmethacrylat, N-Vinylpyrrolidon, N-Vinylcaprolactam, N-Vinylimidazol, N-Vinylmethylimidazol, N-Vinylformamid, Acrylamidomethylpropansulfonsäure, Vinylsulfonsäure, Allylsulfonsäure, Methallylsulfonsäure, Sulfopropylmethacrylat, Sulfopropylacrylat, Vinylformiat, Vinylacetat, Vinylpropionat, Vinylbutyrat und Styrol. Die Copolymerisation kann beispielsweise in wäßriger Lösung oder als Fällungspolymerisation durchgeführt werden. Copolymerisate aus Acrylamid und Acrylnitril können gegebenenfalls bis zu 50 Gew.-% mindestens einer monoethylenisch ungesättigten Carbonsäure einpolymerisiert enthalten. Geeignete monoethylenisch ungesättigte Carbonsäuren sind beispielsweise Acrylsäure, Methacrylsäure, Maleinsäure, Fumarsäure und Itaconsäure.

Zu den Copolymerisaten der Gruppe (2) gehören außerdem Copolymerisate aus Acrylamid und monoethylenisch ungesättigten Carbonsäuren. Solche Copolymerisate enthalten beispielsweise 99 bis 60 Gew.-% Acrylamid oder Methacrylamid und 1 bis 40 Gew.-% mindestens einer monoethylenisch ungesättigten Carbonsäure, vorzugsweise Acrylsäure oder Methacrylsäure, einpolymerisiert.

Copolymerisate der Gruppe (3) enthalten (a) monoethylenisch ungesättigte Carbonsäuren und (b) Acrylnitril und/oder Methacrylnitril einpolymerisiert. Als monoethylenisch ungesättigte Carbonsäuren kommen vorzugsweise Acrylsäure und/oder Methacrylsäure in Betracht. Die Copolymerisate enthalten vorzugsweise 95 bis 60 Gew.-% Acrylsäure und 5 bis 40 Gew.-% Acrylnitril einpolymerisiert.

Als wasserlösliche Polymerisate der Gruppe (4) kommen Copolymerisate in Betracht, die
(a) C₂- bis C₈-Olefine und
(b) monoethylenisch ungesättigte Carbonsäuren
einpolymerisiert enthalten. Als Olefine kommen beispielsweise Ethylen, Propylen, Buten-1, Penten-1, Hexen-1, Isobutylen, Diisobutylen und Styrol in Betracht.

Als Monomere der Gruppe (b) eignen sich Acrylsäure, Methacrylsäure, Maleinsäure, Fumarsäure, Itaconsäure, Ethacrylsäure und Vinylessigsäure. Die Copolymerisate enthalten beispielsweise 20 bis 85 Gew.-% an monoethylenisch ungesättigten Carbonsäuren einpolymerisiert. Zur Herstellung dieser Copolymerisate verwendet man bevorzugt Maleinsäureanhydrid. Besonders bevorzugt werden Copolymerisate aus Maleinsäureanhydrid und Styrol im Molverhältnis 1:1 verwendet, die im Anschluß an die Herstellung hydrolysiert und neutralisiert und in dieser Form eingesetzt werden.

Die obengenannten Polymerisate der Gruppen (1) bis (4) haben K-Werte von 20 bis 250, vorzugsweise 40 bis 125 (bestimmt nach H. Fikentscher in 1 gew.-%iger wäßriger Lösung bei 25°C und pH 7). Diejenigen Copolymerisate, die saure Monomere einpolymerisiert enthalten, wie monoethylenisch ungesättigte Carbonsäuren oder Maleinsäureanhydrid, können in Form der freien Säuren oder in mit Ammoniak, Aminen, Alkalimetall- und/oder Erdalkalimetallbasen neutralisierter Form eingesetzt werden. Die Ammoniumsalze der Copolymerisate umfassen die partiell oder vollständig mit Ammoniak oder Aminen, wie beispielsweise C₁- bis C₃₀-Alkylaminen, Morpholin, Monoethanolamin, Diethanolamin oder Triethanolamin neutralisierten Copolymerisate. Falls die Säureform der Copolymerisate keine ausreichende Löslichkeit in Wasser aufweist, werden die Copolymerisate partiell oder vollständig mit einer Base neutralisiert. Die Ammonium-, Alkalimetall- und Erdalkalimetallsalze der Copolymerisate sind in Wasser gut löslich. Als Basen verwendet man vorzugsweise Ammoniak, Natronlauge, Kalilauge, Soda, Natriumhydrogencarbonat, Kaliumhydrogencarbonat, Magnesiumoxid oder Kalziumhydroxid. Die Homo- und Copolymerisate werden in Form von wäßrigen Lösungen mit einer Konzentration beispielsweise 1 bis 70, vorzugsweise 10 bis 50 Gew.-% hergestellt. Für die Anwendung werden konzentrierte Polymerlösungen gegebenenfalls verdünnt. Die Polymerkonzentration der wäßrigen Lösung der Klebemittel liegt beispielsweise in dem Bereich von 3 bis 40, vorzugsweise 5 bis 25 Gew.-%. Die Viskositäten der für die Anwendung in Betracht kommenden Polymerlösungen betragen beispielsweise 100 bis 15.000, vorzugsweise 500 bis 5.000 mPas bei einer Temperatur von 20°C.

Die erfindungsgemäß zu verwendenden Polymerisate besitzen ein sehr gutes Auftragsverhalten. So kann beispielsweise das Klebemittel bei Filmdruckmaschinen mit einer Walze kontinuierlich auf die Druckdecke aufgebracht und anschließend mit einer Rakel zu einem dünnen Film abgestreift werden. Mit den erfindungsgemäß zu verwendenden wasserlöslichen Polymerisaten erhält man einen sehr einheitlichen dünnen Kleberfilm, der keine Blasen bildet und nicht aufreißt. Dieser als Klebemittel wirkende Film trocknet sehr rasch. Das rasche Trocknen ist insbesondere wichtig, um auch bei hohen Druckgeschwindigkeiten, bei denen die Zeitspanne zwischen Kleberauftrag und dem Bedrucken des textilen Substrats sehr kurz ist, gute Klebeergebnisse, d.h. eine gute Fixierung des zu bedruckenden Textilguts auf der Druckdecke zu erreichen.

Die Trocknungsgeschwindigkeit kann z.B. durch Zusatz von 1 bis 40, vorzugsweise 5 bis 15 Gew.-%, bezogen auf die wäßrige Polymerlösung, eines flüchtigen, wassermischbaren organischen Lösemittels erhöht werden. Als leichtflüchtige organische Lösemittel kommen beispielsweise Methanol, Ethanol, Propanol, Isopropanol oder Aceton in Betracht. Die erfindungsgemäß als Klebemittel für den Textilfilmdruck zu verwendenden Polymerisate haben eine sehr hohe Klebkraft und eignen sich beim Druckprozeß außer zum Fixieren von textilen Substraten aus Baumwolle, Wolle, Seide, auch in besonderem Maße zum Fixieren der schwierig zu handhabenden Substrate aus Polyester oder Polyamid sowie aus Mischfasergeweben wie z.B. Polyester/Baumwolle. Das hohe Klebevermögen der erfindungsgemäß zu verwendenden Polymerisate zeigt sich dabei nicht nur an den trockenen, unbedruckten Stellen des Textils, sondern auch an den bereits bedruckten, also feuchten Stellen.

Dies ist von besonderer Bedeutung bei vielfarbigen Dessins, bei denen das Textil mit mehreren Schablonen bedruckt wird. Erfindungsgemäß als Klebemittel zu verwendende Polymerisate, die eventuell am Textil haften, werden beim Trockenprozeß und/oder beim Farbstoff-Fixierprozeß teilweise hohen thermischen Belastungen ausgesetzt. So herrschen beispielsweise beim Druck mit Reaktivfarbstoffen unter üblichen Fixierbedingungen von 6 bis 12 Minuten Temperaturen von 100 bis 102°C im Sattdampf. Auch wenn die erfindungsgemäß zu verwendenden Polymeren in größerer Menge auf dem Textil zugegen sind und dem Fixierprozeß unterworfen werden, findet keine Verfilmung oder Verharzung der Polymeren auf der Ware statt. Im nachfolgenden Waschprozeß wird das Klebemittel aufgrund seiner guten Löslichkeit in Wasser wieder vollständig ausgewaschen und das Textilgut behält seinen weichen Griff.

Die K-Werte der Polymerisate wurden nach H. Fikentscher, Cellulose-Chemie, Band 13, 58 bis 64 und 71 bis 74 (1932) in 1 gew.-%iger wäßriger Lösung bei 25°C und pH 7,0 bestimmt.

Die Prozentangaben in den Beispielen bedeuten Gewichtsprozent.

### Beispiele

### Herstellung der Polymeren

### Polymer 1

In einem Reaktor, der mit Einlaß- und Auslaßvorrichtung für Stickstoff, einem Rührer und Dosiervorrichtungen ausgestattet ist, werden 400 g Wasser im schwachen Stickstoffstrom auf eine Temperatur von 80°C erhitzt. Sobald diese Temperatur erreicht ist, werden innerhalb von 3 h gleichmäßig 300 g Acrylsäure und 200 g Acrylnitril und innerhalb von 4 h eine Lösung von 8 g Natriumpersulfat in 100 g Wasser zudosiert. Anschließend fügt man eine Lösung von 1,8 g Natriumdisulfit in 20 g Wasser zu und erhitzt das Reaktionsgemisch noch 1 h auf 80°C. Die so anfallende feine Polymerisatsuspension wird mit 300 g 50 %iger wäßriger Natronlauge neutralisiert und abgekühlt. Es entsteht eine klare, schwach gelbliche Polymerisatlösung. Der K-Wert des Copolymerisats beträgt 85.

### Polymer 2

Man verfährt wie bei der Herstellung wie Polymer 1 beschrieben, neutralisiert jedoch das Copolymerisat mit einer Suspension von 84 g Kalziumhydroxid in 200 g Wasser und 225 g 50 %iger wäßriger Natronlauge. Durch Zugabe von Wasser wird der Feststoffgehalt der wäßrigen Lösung auf 25 % eingestellt. Man erhält eine viskose gelbliche und klar aussehende Lösung. Das Polymer hat einen K-Wert von 124.

### Polymer 3

Man verwendet die für die Herstellung des Polymer 1 beschriebene Apparatur und erhitzt darin 800 g Wasser im schwachen Stickstoffstrom auf 80°C. Sobald diese Temperatur erreicht ist, dosiert man innerhalb von 3 h 600 g einer 50 %igen wäßrigen Acrylamidlösung und separat davon eine Lösung von 1,2 g Natriumpersulfat in 100 g Wasser gleichmäßig zu. Während der Zugabe der Monomer- und Initiatorlösung wird das Reaktionsgemisch bei 80°C gerührt. Anschließend wird die Temperatur auf 100°C erhöht und das Reaktionsgemisch 1 h bei dieser Temperatur gehalten. Es entsteht eine klare bräunliche Lösung mit einem Feststoffgehalt von 20,5 %. Der K-Wert des Polymeren beträgt 93.

### Polymer 4

In dem für die für die Herstellung des Polymer 1 verwendeten Reaktor wird eine Lösung von 0,35 g Diethylentriaminpentaessigsäure in Form des Natriumsalzes in 558 g Wasser im schwachen Stickstoffstrom auf eine Temperatur von 80°C erhitzt. Wenn diese Temperatur erreicht ist, dosiert man innerhalb von 3 h eine Mischung von 118 g Wasser, 384 g 50 %iger wäßriger Acrylamidlösung und 48 g Acrylnitril sowie separat davon eine Lösung von 1,2 g Natriumpersulfat in 50 g Wasser bei 80°C gleichmäßig zu. Nach Beendigung der Initiatorzugabe fügt man auf einmal eine Lösung von 1,2 g Natriumpersulfat in 35 g Wasser zu und rührt das Reaktionsgemisch noch 3 h bei 80°C. Danach gibt man auf einmal eine Lösung von 2,4 g Natriumdisulfit in 25 g Wasser zu und kühlt das Reaktionsgemisch auf Raumtemperatur ab. Man erhält eine viskose, fast klare, grün-gelbliche Lösung mit einem Feststoffgehalt von 20 %. Das Copolymerisat hat einen K-Wert von 60.

### Polymer 5

In einem Reaktor, der mit einem Rührer, Rückflußkühler und Zulaufvorrichtungen sowie einer Destillationsbrücke ausgestattet ist, werden 230 ml Benzol vorgelegt und zum Sieden erhitzt. Dann fügt man innerhalb von 3 h eine Lösung von 1,55 l Benzol, 150 g Maleinsäureanhydrid und 157 g Styrol und eine Lösung von 100 ml Benzol und 0,8 g Azoisobutyronitril gleichmäßig unter Sieden des Reaktionsgemisches zu. Danach wird das Reaktionsgemisch noch 2 h unter Rückflußsieden gerührt. Dann fügt man 950 ml Wasser zu und destilliert das Benzol unter Einleiten von Wasserdampf als azeotropes mit Wasser bis zu einem Siedepunkt von 100°C ab. Dann neutralisiert man das Reaktionsgemisch durch Zugabe von 150 g 50 %iger wäßriger Natronlauge und kühlt die Polymerlösung auf Raumtemperatur ab. Der pH-Wert der Lösung wird auf 8 und der Feststoffgehalt auf 30 % eingestellt. Der K-Wert des Copolymerisats beträgt 105.

### Beispiele 1 bis 5

Die oben beschriebenen Polymeren 1 bis 5 wurden im Vergleich zu einem handelsüblichen Polyvinylalkohol auf einer Textilrotationsfilmdruckmaschine der Firma Maschinenbau Kiefersfelden GmbH als Klebemittel für den Textilfilmdruck getestet. Alle Polymeren wurden durch Zugabe von Wasser auf eine Viskosität in dem Bereich von 700 bis 800 mPas eingestellt. Als Prüfsubstrat wurde ein Gewebe aus Baumwolle (Nessel, gebleicht, mercerisiert) und ein Gewebe aus Polyester gewählt.

### Tests im kontinuierlichen Betrieb der Maschine

Das Auftragsverhalten wurde visuell bestimmt und mit einem Notensystem von 1 (sehr gut) bis 5 (mangelhaft) bewertet. Vorteilhaft sind gleichmäßige Filme, die nicht reißen und die keine Blasen bilden sowie nicht ölig sind.

Die Trockenklebekraft wurde manuell bestimmt und ebenfalls mit einem Notensystem von 1 (sehr gut) bis 5 (mangelhaft) bewertet. Die Klebekraft wurde durch den zum Abziehen des Textils von der Druckdecke benötigten Kraftaufwand beurteilt. Das Textil wurde blind, d.h. mit einer Schablone ohne Druckpaste bedruckt.

Die Naßklebekraft wurde manuell bestimmt und mit einem Notensystem von 1 (sehr gut) bis 5 (mangelhaft) bewertet. Die Klebekraft wurde durch den zum Abziehen des Textils von der Druckdecke benötigten Kraftaufwand beurteilt. Das Textil wurde vollflächig mit einer Druckpaste bedruckt.

### Test bei abgeschalteter Maschine

Die Trocknungszeit wurde visuell bestimmt. Dazu wurden ca. 5 g des als Kleber zu verwendenden Polymerisats punktuell auf die Druckdecke aufgebracht und mit einer Rollrakel (4 mm Durchmesser) manuell ein Kleberfilm auf der Druckdecke der abgeschalteten Druckmaschine aufgezogen. Als Vergleich wurde jeweils Polyvinylalkohol mitbewertet. Gemessen wurde die Zeit bis zum Eintrocknen, d.h. bis zum Mattwerden des Films.

### Auswaschverhalten

Das textile Substrat wurde jeweils mit 1 g der erfindungsgemäß zu verwendenden Polymeren 1 bis 5 bestrichen und 5 min bei 150°C im Trockenschrank gelagert. Das textile Material wurde dann kalt und danach bei 40°C ausgewaschen. Die Proben wurden auf Baumwolle und auf Polyester getestet und mit einem Notensystem von 1 bis 5 beurteilt, wobei die Note 1 für solche Proben vergeben wurde, bei denen keine Vergilbung oder Verhärtung des Textil erkennbar war.

Die nach den oben beschriebenen Prüfmethoden erhaltenen Ergebnisse sind in der Tabelle abgegeben.

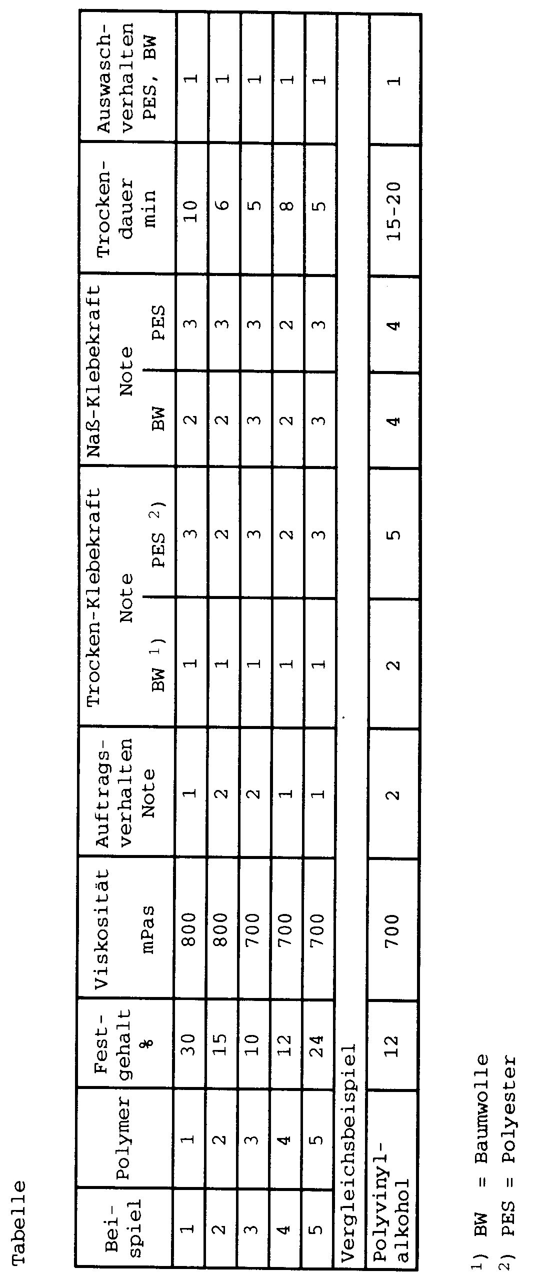

## Patentansprüche

1. Verwendung von jeweils wasserlöslichen
(1) Homopolymerisaten aus Acrylamid oder Methacrylamid oder Copolymerisaten aus Acrylamid und Methacrylamid,
(2) Copolymerisaten aus
(a) Acrylamid und/oder Methacrylamid und/oder
(b) Acrylnitril und/oder Methacrylnitril und/oder
(c) monoethylenisch ungesättigten Carbonsäuren,
(3) Copolymerisaten aus
(a) monoethylenisch ungesättigten Carbonsäuren und
(b) Acrylnitril und/oder Methacrylnitril
oder
(4) Copolymerisaten aus
(a) C₂- bis C₈-Olefinen und
(b) monoethylenisch ungesättigten Carbonsäuren,
wobei die Carboxylgruppen enthaltenden Copolymerisate der Gruppen (2), (3) und (4) auch in Form der Ammonium-, Alkalimetall- und Erdalkalimetallsalze vorliegen können,
als Klebemittel für den Textilfilmdruck.

2. Verwendung nach Anspruch 1, dadurch gekennzeichnet, daß man Polyacrylamid einsetzt.

3. Verwendung nach Anspruch 1, dadurch gekennzeichnet, daß man Copolymerisate aus
(a) Acrylamid,
(b) Acrylnitril und gegebenenfalls
(c) Acrylsäure und/oder Methacrylsäure
einsetzt.

4. Verwendung nach Anspruch 3, dadurch gekennzeichnet, daß man Copolymerisate aus
(a) 99 bis 60 Gew.-% Acrylamid und
(b) 1 bis 40 Gew.-% Acrylnitril
mit K-Werten von 30 bis 125 (bestimmt nach H. Fikentscher in 1 gew,-%iger wäßriger Lösung bei 25°C und pH 7,0) einsetzt.

5. Verwendung nach Anspruch 1, dadurch gekennzeichnet, daß man Natriumsalze von hydrolysierten Copolymerisaten aus Maleinsäureanhydrid und Styrol einsetzt.
